# EUROPÄISCHE PATENTSCHRIFT

(11) **EP 3 258 075 B1**
(45) Veröffentlichungstag und Bekanntmachung des Hinweises auf die Patenterteilung: **18.03.2020**
(21) Anmeldenummer: 17171123.7
(22) Anmeldetag: 15.05.2017
(51) Int. Cl.: F01L 1/344

(54) **CLIPFILTER FÜR EIN HYDRAULIKVENTIL UND HYDRAULIKVENTIL MIT EINEM DERARTIGEN CLIPFILTER**
CLIP FILTER FOR A HYDRAULIC VALVE AND HYDRAULIC VALVE WITH SUCH A CLIP FILTER
FILTRE À CLIP POUR VANNE HYDRAULIQUE ET VANNE HYDRAULIQUE COMPRENANT UN TEL FILTRE

(30) Priorität: 14.06.2016 DE 102016110876; 18.11.2016 DE 102016122231
(43) Veröffentlichungstag der Anmeldung: 20.12.2017
(73) Patentinhaber: ECO Holding 1 GmbH, 97828 Marktheidenfeld (DE)
(72) Erfinder: Hoch, David, 72644 Oberboihingen (DE); Hugel, Christian, 73420 Wendlingen (DE); Jacob, Thomas, 70199 Stuttgart (DE); Senst, Oliver, 70178 Stuttgart (DE); Schack, Detlev, 71120 Grafenau (DE)

(56) Entgegenhaltungen:
- EP-A1- 2 860 429
- DE-A1-102011 107 352
- JP-A- 2007 000 791

## Beschreibung

### Technisches Gebiet

Die Erfindung betrifft einen Clipfilter für ein Hydraulikventil und ein Hydraulikventil mit einem derartigen Clipfilter.

### Stand der Technik

Clipfilter für Hydraulikventile sind beispielsweise aus der DE 10 2007 050 447 A1 bekannt. Der Clipfilter besteht üblicherweise aus zwei im Allgemeinen halbkreisförmigen Schalen, welche einenends miteinander und zueinander bewegbar verbunden sind und anderenends zur Herbeiführung eines geschlossen Ringes jeweils ein komplementäres Teil eines Clipfilterschloss besitzen. Um einen Schmutzeintrag in das Hydraulikventil zu verhindern, ist sicherzustellen, dass sich der Clipfilter bzw. das Clipfilterschloss auch bei hohen Lastspitzen nicht öffnet.

Auch die DE 100 27 080 A1 offenbart einen Clipfilter, wobei ein erstes Ende des Clipfilters ein zweites Ende des Clipfilters nur teilweise aufnehmend ausgestaltet ist, wodurch ein Lösen der beiden Enden in Abhängigkeit der Belastung des Clipfilters relativ leicht möglich ist.

Die DE 10 2011 107 352 A1 offenbart einen gattungsgemäße Clipfilter mit einem nasenförmigen Clipelement, welches keilförmig ausgebildet ist. Eine das Clipelement aufnehmende komplementäre Ausnehmung sowie das Clipelement weisen auf einer Unter- oder Oberseite jeweils eine orthogonal zur Öffnungs- bzw. Schließrichtung ausgebildete Fläche auf. Das Clipelement weist eine im Wesentlichen parallel zur Öffnungs- und Schließrichtung ausgebildete Seite sowie eine keilförmige Seite auf.

Der EP 2 860 429 A1 ist ein Filter zu entnehmen, dessen erste Eingriffseinheit einen Vertiefungsabschnitt und dessen zweite Eingriffseinheit einen Vorsprungsabschnitt aufweisen, wobei der Vorsprungsabschnitt mit dem Vertiefungsabschnitt in Verbindung stehen.

### Offenbarung der Erfindung

Aufgabe der Erfindung ist es, einen verbesserten, robusten und gleichzeitig kostengünstigen Clipfilter für ein Hydraulikventil bereitzustellen. Zusätzlich soll ein Hydraulikventil mit einem Clipfilter bereitgestellt werden, welches zuverlässig vor einem Schmutzeintrag geschützt und damit robust und dauerhaft funktionsfähig ist.

Die vorgenannten Aufgaben werden mit den Merkmalen des unabhängigen Anspruchs gelöst. Vorteilhafte Ausgestaltungen mit zweckmäßigen und nicht-trivialen Weiterbildungen der Erfindung sind in den jeweiligen Unteransprüchen angegeben. Ein erfindungsgemäßer Clipfilter für ein Hydraulikventil weist einen Trägerrahmen mit im Trägerrahmen aufgenommenen Filterelementen auf. Der Trägerrahmen ist ringförmig ausgebildet und weist ein Clipfilterschloss auf. Enden des Trägerrahmens sind zum Verschließen des Clipfilters miteinander in Eingriff bringbar, wobei das erste Ende ein nasenförmiges Clipelement und das zweite Ende eine zum Clipelement komplementäre Ausnehmung aufweisen. Erfindungsgemäß ist das Clipfilterschloss öffnungskraftoptimiert ausgebildet vorgesehen. Das heißt mit anderen Worten, dass zum Öffnen des Clipfilterschlosses hohe Kräfte einzusetzen sind, wohingegen ein Verschließen des Clipfilterschlosses unter Aufwendung wesentlich geringerer Kräfte erfolgt. Dadurch ist eine Robustheit des Clipfilterschlosses im Betrieb bei gleichzeitig einfacher Montage gegenüber dem Stand der Technik wesentlich erhöht. Der Clipfilter bleibt insbesondere bei hohen einmaligen Lastspitzen im Betrieb sicher geschlossen.

Die Ausnehmung ist das nasenförmige Clipelement im verriegelten Zustand in Umfangsrichtung vollständig und in radialer Richtung einenends vollständig und anderenends überwiegend umfassend ausgebildet ist. Das bedeutet mit anderen Worten, dass die Ausnehmung das Clipelement nahezu vollständig umfasst. Das Clipelement kann sich somit weder in radialer Richtung bewegen, da es in Umfangsrichtung vollständig von der Ausnehmung umfasst ist, noch kann es sich in Umfangsrichtung bewegen, da es einenends vollständig über seine radiale Erstreckung und anderenends überwiegend über seine radiale Erstreckung von der Ausnehmung umfasst wird.

Das nasenförmige Clipelement ist keilförmig mit einer Unterseite und einer von der Unterseite abgewandt ausgestalteten Oberseite ausgebildet und die Ausnehmung ist komplementär, komplementäre Flächen aufweisend, dazu ausgestaltet. Der Vorteil des keilförmigen Clipelementes, welches insbesondere in Schließrichtung sich verjüngend ausgeführt ist, ist darin zu sehen, dass ein vereinfachtes Einführen in die Ausnehmung ermöglicht ist.

Zur weiteren Steigerung der aufzuwendenden Öffnungskräfte weisen das Clipelement sowie die Ausnehmung jeweils wenigstens einen orthogonal zur Öffnungs- bzw. Schließrichtung ausgebildeten Flächenanteil auf. Das bedeutet, dass zur Überwindung einer senkrecht zur Öffnungs- bzw. Schließrichtung ausgebildeten Wandung bzw. Fläche insbesondere die Öffnungskräfte im Vergleich zum Stand der Technik wesentlich erhöht sind.

Das Clipelement des Clipfilterschlosses weist eine im Wesentlichen parallel zur Öffnungs- und Schließrichtung ausgebildete Unterseite auf.
Erfindungsgemäß weist zur öffnungskraftoptimierten Ausbildung die Ausnehmung an einer der Unterseite des Clipelements gegenüberliegenden Fläche einen Wulst und die Unterseite des Clipelements eine zum Wulst komplementäre Ausnehmung aufweist. Hierdurch kann eine zusätzliche Sicherung gegen ein Öffnen erzielt werden.

Ein an einer Außenseite des Trägerrahmens ausgebildeter Außenarm zur Lageänderung während des Schließvorganges ausgebildet, wobei der Außenarm im Bereich der Ausnehmung eine Querschnittsreduzierung aufweist. Die Ausnehmung, welche zur Aufnahme des nasenförmigen Clipelementes ausgestaltet ist, gliedert den Trägerrahmen im Bereich der Ausnehmung in zwei Außenarme, zwischen denen sie ausgebildet ist. Zur Reduzierung der beim Schließen des Clipfilters aufzubringenden Kräfte ist der von der Unterseite des Clipelementes abgewandte Außenarm, somit der an der Außenseite des Trägerrahmens ausgebildete Außenarm, flexibel gestaltet, damit eine Lageänderung des Außenarmes in radialer Richtung nach Außen möglich ist.

Die Flexibilität zur Lageänderung ist auch mit einer Ausrundung herbeizuführen, die der Außenarm an seiner vom Clipelement abgewandt angeordneten Seite aufweist. Diese Ausrundung kann auch in Kombination mit der Querschnittsreduzierung ausgebildet sein, wodurch sich eine verbesserte Flexibilität ergibt. Des Weiteren kann die Ausrundung ein mögliches Abbrechen des Außenarmes vermeiden, sofern bei der Montage zu hohe Schließkraft aufgewendet wird.

Zur Bereitstellung eines kostengünstigen Clipfilters sind die Filterelemente einteilig als Bandblech mit Filteröffnungen ausgebildet, wobei das Bandblech in den Trägerrahmen eingespritzt vorgesehen ist.

Der zweite Aspekt betrifft ein Hydraulikventil mit einer Ventilbuchse und einem in der Ventilbuchse entlang einer Längsachse der Ventilbuchse axial verschiebbaren Ventilkolben. Das Hydraulikventil weist einen Versorgungsanschluss zum Zuführen eines Hydraulikfluids, wenigstens einen Arbeitsanschluss und wenigstens einen Tankanschluss zum Ableiten des Hydraulikfluids auf. Der Ventilkolben ist mit Hilfe eines elektromagnetischen Aktuators des Hydraulikventils verschiebbar, wobei der Versorgungsanschluss und/oder der Arbeitsanschluss von einem Clipfilter nach einem der vorangegangenen Ansprüche überdeckt sind. Der Vorteil der Erfindung ist die Bereitstellung eines Hydraulikventils, welches aufgrund eines gegen Öffnen gesicherten Clipfilters zuverlässig gegen eine mögliche Verschmutzung ausgebildet ist. Dies führt zu einer Lebensdauerverlängerung des erfindungsgemäßen Hydraulikventils, wodurch sich Garantie- und Kulanzkosten wesentlich reduzieren lassen. Ebenso dient das erfindungsgemäße Hydraulikventil einer Lebensdauerverlängerung des es aufweisenden Aggregates, wie bspw. eine mechatronische Getriebesteuerung oder ein Nockenwellenversteller.

Günstige Ausgestaltungen und Vorteile der Erfindung ergeben sich aus den weiteren Ansprüchen, der Beschreibung und der Zeichnung.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Schnitt durch ein Hydraulikventil nach einem Ausführungsbeispiel der Erfindung in einer unbestromten Ausgangsstellung;
- Fig. 2: einen offenen Clipfilter nach dem Stand der Technik und
- Fig. 3: einen vergrößerten Ausschnitt eines geschlossenen erfindungsgemäßen Clipfilters.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

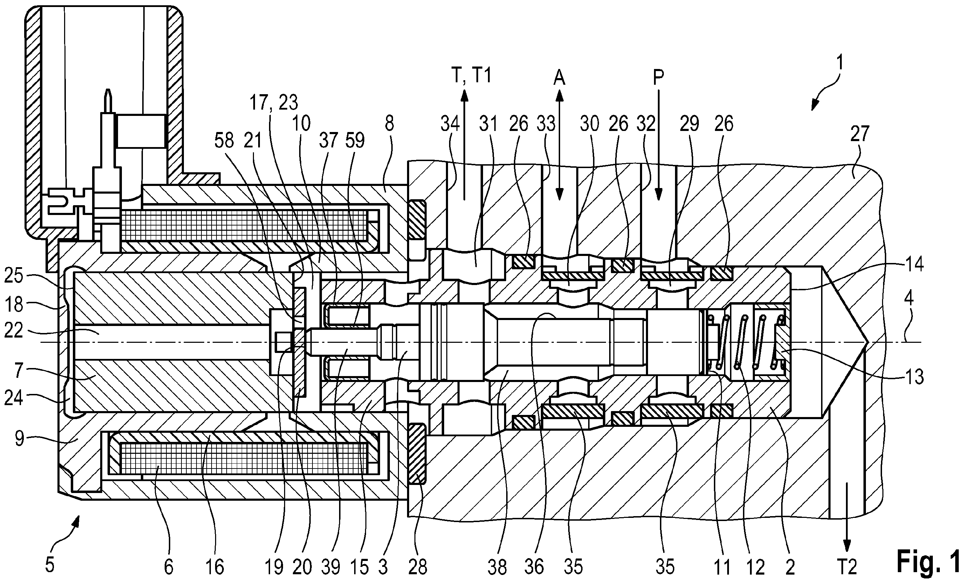

Figur 1 zeigt einen Längsschnitt durch ein Hydraulikventil 1 nach einem Ausführungsbeispiel der Erfindung. Das Hydraulikventil 1 in Form eines Proportionalventils dient beispielhaft einer Verwendung in einem automatisierten Getriebe. Ein erfindungsgemäßer Clipfilter 35 kann in dem nachfolgend beschriebenen Hydraulikventil 1 beispielhaft Anwendung finden, aber auch in anderen Hydraulikventilen, wie z.B. in einem als Cartridgeventil zur Verstellung eines Nockenwellenverstellers vorgesehenen Hydraulikventil zum Einsatz kommen.

Das Hydraulikventil 1 weist eine Ventilbuchse 2 und einen in einer stufenförmigen Bohrung 38 der Ventilbuchse 2 entlang einer Längsachse 4 der Ventilbuchse 2 axial verschiebbaren Ventilkolben 3 auf. Der Ventilkolben 3 ist mit Hilfe eines elektromagnetischen Aktuators 5 des Hydraulikventils 1 verschiebbar. Der Aktuator 5, der einen Magnetteil des Hydraulikventils 1 darstellt, weist einen mit dem Ventilkolben 3 wirkverbundenen Anker 7 auf, der koaxial zu der Ventilbuchse 2 angeordnet ist. Weiter ist der Anker 7 mit Hilfe der den Anker 7 umfassenden Magnetspule 6 bewegbar in einem Gehäuse 8 des Aktuators 5 aufgenommen, wobei der Anker 7 in einem Polrohr 9 und einem Polkern 10 verschiebbar angeordnet ist.

Eine Bestromung der Magnetspule 6 führt zur axialen Verschiebung des Ventilkolbens 3, wobei ein an einer von dem Aktuator 5 abgewandten Stirnfläche 11 des Ventilkolbens 3 angeordnetes Rückhalteelement 12 eine Rückhaltekraft auf den Ventilkolben 3 ausübt, gegen die der Ventilkolben 3 zu verschieben ist. Das Rückhalteelement 12, in diesem Ausführungsbeispiel in Form einer Schraubendruckfeder ausgebildet, stützt sich an einem Deckel 13 ab, welcher im Bereich einer vom Aktuator 5 abgewandt ausgebildeten Gehäusestirnfläche 14 mit Presssitz in der Ventilbuchse 2 angeordnet ist.

Die Magnetspule 6 ist radial innen von einem Spulenträger 16 begrenzt im Gehäuse 8 aufgenommen, wobei das Gehäuse 8 einteilig mit dem Polkern 10 ausgebildet ist, welcher dem Polrohr 9 gegenüberliegend angeordnet ist. Der zylinderförmige Polkern 10 ist der Ventilbuchse 2 zugewandt und einen Endabschnitt 15 der Ventilbuchse 2 umfassend angeordnet. Das zylinderförmige Polrohr 9 weist an seinem vom Polkern 10 abgewandt ausgebildeten Ende eine einen Ankerraum 17 begrenzende Wandung 18 auf.

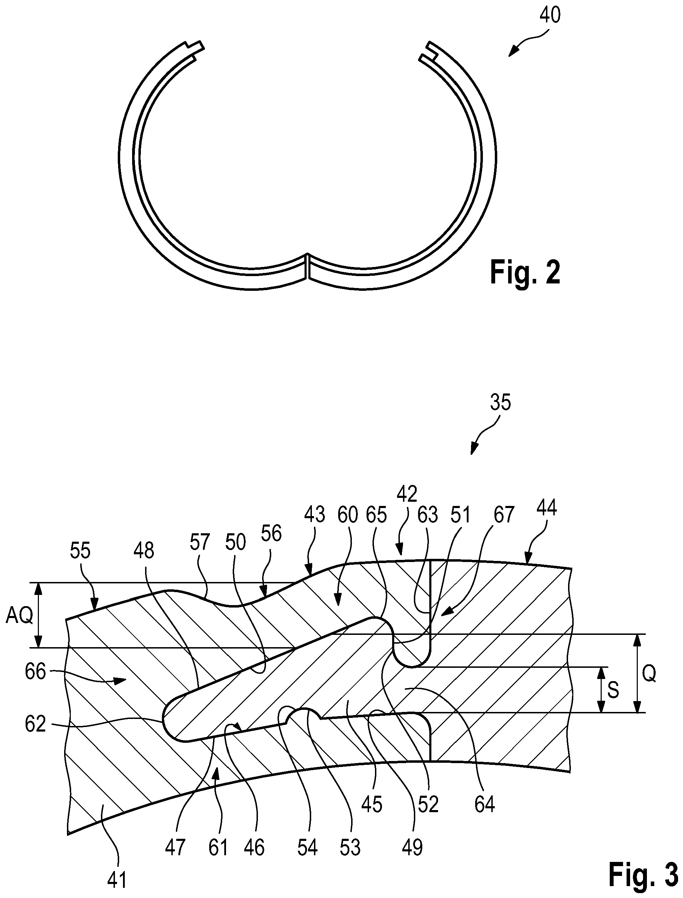

Der nicht leitende Spulenträger 16, in welchem eine Spulenwicklung der Magnetspule 6 aufgenommen ist, weist ein u-förmiges Profil auf und ist auf dem Polrohr 9 sowie auf dem Polkern 10 aufgesetzt. Das Polrohr 9 und der Polkern 10 können gemäß einer in Fig. 3 gezeigten Ausführungsform einteilig und mittels eines sehr dünnen Verbindungsstegs verbunden vorgesehen sein, wobei in diesen Fall der Polkern 10 und das Gehäuse 8 als separate Bauteile ausgebildet sind.

Im Betrieb wird die Magnetspule 6 erregt und erzeugt ein Magnetfeld, welches den Polkern 10, den Anker 7, das Polrohr 9 und das Gehäuse 8 magnetisiert. Der vom Polkern 10 umfasste Endabschnitt 15 ist ebenfalls vom Magnetfeld erfasst.

Ein Kolbenstößel 39 am Ende des Ventilkolben 3 liegt mit seiner dem Anker 7 zugewandt ausgebildeten Stirnfläche 19 an einem Antihaftelement 20 an, das an einer der Stirnfläche 19 zugewandt ausgebildeten ersten Stirnfläche 21 des Ankers 7 angeordnet ist. Somit ist der Ventilkolben 3 mit dem Anker 7 wirkverbunden und eine axiale Bewegung des Ankers 7 ist auf den Ventilkolben 3 übertragbar. Das Antihaftelement 20 ist scheibenförmig ausgebildet und dient der Vermeidung eines Anhaftens des Ankers 7 an der magnetisch leitenden Ventilbuchse 2. Des Weiteren verschließt das Antihaftelement 20 weitestgehend einen durchströmbaren Ankerkanal 22, welcher zentral und sich entlang der Längsachse 4 im Anker 7 erstreckend und als Bohrung ausgebildet ist.

In der dargestellten Position des Hydraulikventils 1 ist zwischen dem Anker 7 und der Ventilbuchse 2 ein ringförmiger erster Raum 23 ausgebildet. Der erste Raum 23 ist über wenigstens eine im Antihaftelement 20 eingebrachte und dieses in Richtung der Längsachse 4 vollständig durchdringende Öffnung 58 über den Ankerkanal 22 mit einem ringförmigen zweiten Raum 24 durchströmbar verbunden, wobei der zweite Raum 24 zwischen einer von der ersten Stirnfläche 21 abgewandt ausgebildeten zweiten Stirnfläche 25 des Ankers 7 und der Wandung 18 des Polrohrs 9 ausgestaltet ist. Das bedeutet, dass jederzeit ein Druckausgleich zwischen den Räumen 23, 24 möglich ist. Somit muss der Anker 7 lediglich eine Verschiebearbeit aufgrund des Ventilkolbens 3 bei einer Verschiebung des Ventilkolbens 3 in die vom Aktuator 5 abgewandte Richtung ausüben und weist zur Verstellung des Ventilkolbens 3 eine schnelle Reaktionszeit auf.

Die Ventilbuchse 2 ist mittels Dichtelementen 26, 28 dichtend beispielsweise in einem Getriebebauteil 27 angeordnet und weist einen Versorgungsanschluss P zum Zuführen des Hydraulikfluids, wenigstens einen Arbeitsanschluss A und wenigstens einen Tankanschluss T zum Ableiten des Hydraulikfluids auf. Dem Versorgungsanschluss P, dem Arbeitsanschluss A und dem Tankanschluss T sind in der Ventilbuchse 2 eine erste Ringnut 29, eine zweite Ringnut 30 bzw. eine dritte Ringnut 31 zugeordnet, die jeweils über Anschlusskanäle 32, 33, 34 mit den Anschlüssen des Getriebebauteils 27 verbunden sind. Es sind weitere zwei Tankanschlüsse T1 und T2 für Leckage in dem Getriebebauteil 27 vorgesehen, wobei die Tankanschlüsse T und T1 in einen gemeinsamen Anschlusskanal 34 des Getriebebauteils 27 münden.

Der Versorgungsanschluss P ist zur Verbindung mit einer nicht näher dargestellten Ölpumpe ausgestaltet, so dass das Hydraulikventil 1 mit dem Hydraulikfluid, welches in diesem Ausführungsbeispiel Öl ist, versorgbar ist. Die erste Ringnut 29 und die zweite Ringnut 30 weisen jeweils einen Clipfilter 35 zum Filtern des Hydraulikfluids auf.

Der Ventilkolben 3 weist eine umlaufende Ringnut 36 auf. Je nach Positionierung des Ventilkolbens 3 wird entweder der Arbeitsanschluss A mit dem Tankanschluss T, wie dargestellt, oder der Versorgungsanschluss P mit dem Arbeitsanschluss A durchströmbar verbunden.

Ein Dichtelement 37 in Form einer im Querschnitt u-förmigen, beispielsweise tiefgezogenen Scheibe dient der räumlichen Trennung von Magnet- und Hydraulikteil des Hydraulikventils 1 und wird in dem Endabschnitt 15 der Ventilbuchse 2 angeordnet. Vorzugsweise wird das Dichtelement 37 in die Bohrung 38 eingepresst.

Wie ersichtlich ist, durchragt der Kolbenstößel 39 einen innenliegenden Schenkel 59 des Dichtelements 37 kontaktlos, so dass ein zwischen Kolbenstößel 39 und Schenkel 59 entstehender Spalt als Dichtspalt und damit als Spaltdichtung wirkt, wobei durch das Verhältnis Dichtlänge zu Spalthöhe des Dichtspaltes ein Austausch des Hydraulikfluids auf ein Minimum reduziert werden kann.

Hierdurch kann ein Austausch von Schmutzpartikeln, welche die magnetischen und/oder die hydraulischen Funktionen beeinträchtigen, zwischen dem Magnet- und dem Hydraulikteil des Hydraulikventils 1 deutlich reduziert werden. Insbesondere kann ein negativer Einfluss auf den Ankerlauf im Polrohr 9 und die hierdurch hervorgerufene Magnet/Ventil-Hysterese verhindert werden.

Zur Absicherung des Hydraulikventils 1 und des gesamten Hydraulikteils der Mechatronik gegenüber Verschmutzung, überdecken die ringförmigen Clipfilter 35 die Anschlüsse P und A. Im Anlieferungszustand sind die Clipfilter 35 an einer Stelle des Umfangs offen, um sie montieren zu können. Fig. 2 zeigt einen bekannten Clipfilter 40 in einem offenen Zustand. Nachteilig ist bei bekannten Clipfiltern 40, dass sich diese beispielsweise durch die hohe Strömungskräfte bei der Erstbefüllung des Hydraulikventils 1 ungewollt öffnen, so dass die Funktion des Clipfilters 40 im Betrieb des Hydraulikventils 1 nicht mehr gegeben ist. Auch hohe Lastspitzen können zu einem ungewollten Öffnen des bekannten Clipfilters 40 führen.

Der erfindungsgemäße Clipfilter 35, welcher ausschnittsweise in Fig. 3 stark vergrößert dargestellt ist, weist in einem Trägerrahmen 41 aufgenommene, nicht näher gezeigte Filterelemente auf, wobei der Trägerrahmen 41 ringförmig ausgebildet ist. Ein Clipfilterschloss 42 des Clipfilters 35, welches zum Verschließen des Clipfilters 35 dient, weist miteinander in Eingriff bringbare Enden bzw. Endbereiche 43, 44 des Trägerrahmens 41 auf. Wie ersichtlich, weist das zweite Ende 44 ein nasenförmiges Clipelement 45 auf, welche zum Verschließen des Trägerrahmens 41 in eine komplementäre Ausnehmung 46 des ersten Endes 43 eingreift. Um ein ungewolltes Öffnen des Clipfilters 35 auszuschließen, ist erfindungsgemäß das Clipfilterschloss 42 öffnungskraftoptimiert ausgebildet.

Unter dem öffnungskraftoptimierten Clipfilterschloss 42 ist ein Clipfilterschloss 42 zu verstehen, das geringe Montage- bzw. Schließkräfte und dennoch hohe Öffnungskräfte vorsieht. Das heißt mit anderen Worten, dass die Öffnungskräfte zum Öffnen des Clipfilterschlosses 42 wesentlich höher sind als die Schließkräfte, die zum Schließen des Clipfilterschlosses 42 notwendig sind. Das bedeutet, dass das Clipfilterschloss 42 einerseits eine gewisse Flexibilität beim Schließvorgang aufweisen muss, wohingegen es bei einem möglichen Öffnungsvorgang hemmend auszugestalten ist. Dies wird mit Hilfe einer optimierten Längserstreckung des Clipfilterschlosses 42 in Umfangsrichtung erreicht. Das heißt mit anderen Worten, dass ein männlicher Teil des Clipfilterschlosses 42, welcher in Form des nasenförmigen Clipelementes 45 ausgeführt ist, und ein weiblicher Teil des Clipfilterschlosses 42, welche in Form der Ausnehmung 46 ausgestaltet ist, in ihren Erstreckungen in radialer Richtung und Umfangsrichtung in Bezug auf die möglichen auf den Clipfilter 35 einwirkenden Kräfte anzupassen sind.

Das nasenförmige Clipelement 45 ist im Wesentlichen keilförmig mit einer im Wesentlichen parallel zur Öffnungs- bzw. Schließrichtung ausgebildeten Unterseite 47 und einer Oberseite 48 ausgebildet, wobei die Länge des Clipelements 45 und der Ausnehmung 46 in Umfangsrichtung derart ausgebildet ist, dass das Clipfilterschloss 42 eine gewisse Flexibilität aufweist. Die Ausnehmung 46 weist zur Unterseite 47 und Oberseite 48 komplementär ausgebildete Flächen 49, 50 auf.

Weiter weisen das Clipelement 45 sowie die Ausnehmung 46 jeweils orthogonal zur Öffnungs- bzw. Schließrichtung, d.h. zur Umfangsrichtung ausgebildete Flächenanteile 51, 52 auf, die einem Öffnen durch in Umfangsrichtung wirkende Kräfte einen hohen Widerstand entgegen bringen. Hierdurch werden die zum Öffnen aufzuwendenden Umfangskräfte wesentlich erhöht.

Die orthogonalen Flächenanteile 51, 52 schließen sich, wie aus Fig. 3 ersichtlich, an die Oberseite 48 bzw. die Fläche 50 an. Die Oberseite 48 ist gegenüber der Unterseite 47 in Umfangsrichtung geneigt ausgebildet, wodurch das Clipelement 45 einen in Umfangsrichtung veränderlichen Querschnitt Q aufweist, der sich ausgehend von einer Elementspitze 62 in Richtung des ersten Flächenanteils 51 vergrößert.

Die Ausnehmung 46 ist somit das nasenförmige Clipelement 45 im verriegelten Zustand in Umfangsrichtung vollständig und in radialer Richtung einenends, an seiner Elementspitze 62, vollständig und anderenends, an seinem von der Elementspitze 62 abgewandt ausgebildeten Ende, überwiegend umfassend ausgeführt.

Das Clipelement 45 ist mittels eines Steges 64 mit dem Ende 44 des Trägerrahmens 41 verbunden.

Der Steg 64 weist im dargestellten Ausführungsbeispiel einen Stegquerschnitt S auf, welcher abzüglich einer Abrundung 65 am ersten Flächenanteil 51 einem halben Querschnitt Q des Clipelementes 45 am ersten Flächenanteil 51 entspricht. Der Stegquerschnitt S ist in Abhängigkeit der möglichen, im Betrieb des Hydraulikventils 1 auf den Clipfilter 35 wirkenden Kräfte bzw. die auf den Steg 64 resultierenden Kräfte so auszulegen, dass Umfangskräfte insbesondere beim Schließ- und Öffnungsvorgang ohne Versagen, d.h. Riss oder Bruch des Steges aufgenommen werden. Die Abrundung 65 dient einer Reduzierung der aufzubringenden Schließkräfte.

Die der Unterseite 47 des Clipelements 45 zugeordnete Fläche 49 der Ausnehmung 46 weist einen Wulst 53 auf, wobei die Unterseite 47 des Clipelements 45 eine komplementäre Ausnehmung 54 aufweist. Der Wulst 53 bewegt den orthogonalen Flächenanteil 51 des Clipelementes 45 bei öffnend wirkenden Umfangskräften gegen den orthogonalen Flächenanteil 52 der Ausnehmung 46, so dass sich die Öffnungskräfte zusätzlich erhöhen und ein Öffnen des Clipfilters 35 zusätzlich erschwert wird.

Der Trägerrahmen 41 weist in Umfangsrichtung im Bereich der Ausnehmung 46 einen ersten Außenarm 60 an seiner Außenseite 55 und diesem gegenüberliegend einen zweiten Außenarm 61 auf, zwischen denen sich die Ausnehmung 46 erstreckend ausgebildet ist. Das Clipelement 45 ist zwischen dem ersten Außenarm 60 und dem zweiten Außenarm 61 in der Ausnehmung 46 vollständig aufgenommen.

Wie weiter ersichtlich ist, weist die Außenseite 55 des Trägerrahmens 41 im Bereich der Ausnehmung 46, d.h. im Bereich der Oberseite 48 eine Querschnittsreduzierung 56 auf, welche an die Form des Clipelements 45 bzw. der Ausnehmung 46 angepasst vorgesehen ist. Das heißt mit anderen Worten, dass der erste Außenarm 60 eine Querschnittsveränderung seines Armquerschnitts AQ ausgehend von seinem der Elementspitze 62 zugewandt ausgebildeten ersten Armende 66 bis zu seinem einer Seiterfläche 63 des Endes 44 gegenüberliegend anzuordnenden zweiten Armende 67 besitzt. Der Armquerschnitt AQ ist in einem, die Oberseite 48 bedeckenden Bereich, überwiegend der Neigung der Oberseite 48 des Clipelementes 45 angepasst, in radialer Richtung konstant ausgebildet.

Die Querschnittsreduzierung 56 dient der Erhöhung der Flexibilität und ermöglicht beim Schließen des Clipfilters 35 eine elastische Verformung radial nach außen. Somit ist der erste Außenarm 60 zur Lageänderung während des Schließvorganges ausgebildet.

Im Bereich der Unterseite 47 ist der Querschnitt des Trägerrahmens 41 dahingehend optimiert, dass dieser Bereich weniger flexibel vorgesehen ist, um die Wahrscheinlichkeit eines radialen Anschlagens am Einbauraum und die damit einhergehenden höheren Schließkräfte bzw. Beanspruchungen zu minimieren.
Die Querschnittsreduzierung 56 geht in eine Ausrundung 57 über, um einen optimalen Kompromiss zwischen geringer Beanspruchung beim Schließen und Flexibilität zu erzielen.

Das Clipfilterschloss 42 ermöglicht eine einfachere Montage durch geringere Schließkräfte, verhindert jedoch das ungewollte Öffnen des Clipfilters 35 bei hohen Lastspitzen oder bei der Erstbefüllung. Damit schützt der erfindungsgemäße Clipfilter 35 das Hydraulikventil 1 zuverlässig vor Verschmutzung.

Die Filterelemente können beispielsweise einteilig als Bandblech mit Filteröffnungen vorgesehen und in den Trägerrahmen 41, welcher vorzugsweise aus Kunststoff besteht, eingespritzt vorgesehen sein.

## Patentansprüche

1. Clipfilter für ein Hydraulikventil mit in einem Trägerrahmen aufgenommenen Filterelementen, wobei der Trägerrahmen (41) ringförmig ausgebildet ist und ein Clipfilterschloss (42) aufweist, wobei Enden (43, 44) des Trägerrahmens (41) zum Verschließen des Clipfilters (35) miteinander in Eingriff bringbar sind, wobei das erste Ende (43) ein nasenförmiges Clipelement (45) und das zweite Ende (44) eine zum Clipelement (45) komplementäre Ausnehmung (46) aufweisen, wobei die Ausnehmung (46) das nasenförmige Clipelement (45) im verriegelten Zustand in Umfangsrichtung vollständig und in radialer Richtung einenends vollständig und anderenends überwiegend umfassend ausgebildet ist, wobei das nasenförmige Clipelement (45) keilförmig mit einer Unterseite (47) und einer von der Unterseite (47) abgewandt ausgestalteten Oberseite (48) ausgebildet ist und die Ausnehmung (46) komplementär, komplementäre Flächen aufweisend, ausgestaltet ist, und wobei das Clipelement (45) sowie die Ausnehmung (46) jeweils wenigstens einen orthogonal zur Öffnungs- bzw. Schließrichtung ausgebildeten Flächenanteil (51, 52) aufweisen und das Clipelement (45) eine im Wesentlichen parallel zur Öffnungs- und Schließrichtung ausgebildete Unterseite aufweist, **dadurch gekennzeichnet, dass** zur öffnungskraftoptimierten Ausbildung des Clipfilterschlosses (42) die Ausnehmung (46) an einer der Unterseite (47) des Clipelements (45) gegenüberliegenden Fläche (49) einen Wulst (53) und die Unterseite (47) des Clipelements (45) eine zum Wulst (53) komplementäre Ausnehmung (54) aufweist und ein an einer Außenseite (55) des Trägerrahmens (41) ausgebildeter Außenarm (60) zur Lageänderung in einem Schließvorgang ausgebildet ist, wobei der Außenarm (60) im Bereich der Ausnehmung (54) eine Querschnittsreduzierung (56) aufweist.

2. Clipfilter nach Anspruch 1, **dadurch gekennzeichnet, dass** der Außenarm (60) an seiner vom Clipelement (45) abgewandt angeordneten Seite eine Ausrundung (57) aufweist.

3. Clipfilter nach einem der vorangegangenen Ansprüche, **dadurch gekennzeichnet, dass** die Filterelemente einteilig als Bandblech mit Filteröffnungen ausgebildet sind, wobei das Bandblech in den Trägerrahmen (41) eingespritzt vorgesehen ist.

4. Hydraulikventil mit einer Ventilbuchse (2) und einem in der Ventilbuchse (2) entlang einer Längsachse (4) der Ventilbuchse (2) axial verschiebbaren Ventilkolben (3), mit einem Versorgungsanschluss (P) zum Zuführen eines Hydraulikfluids, wenigstens einem Arbeitsanschluss (A) und wenigstens einem Tankanschluss (T1; T2) zum Ableiten des Hydraulikfluids, wobei der Ventilkolben (3) mit Hilfe eines elektromagnetischen Aktuators (5) des Hydraulikventils (1) verschiebbar ist, wobei der Versorgungsanschluss (P) und/oder der Arbeitsanschluss (A) von einem Clipfilter (35) nach einem der vorangegangenen Ansprüche überdeckt sind.

5. Hydraulikventil nach Anspruch 4, **dadurch gekennzeichnet, dass** das Hydraulikventil (1) als elektrohydraulisches Proportionalventil insbesondere für eine mechatronische Getriebesteuerung vorgesehen ist.

6. Hydraulikventil nach Anspruch 4, **dadurch gekennzeichnet, dass** das Hydraulikventil (1) als Cartridgeventil zur Verstellung eines Nockenwellenverstellers vorgesehen ist.

## Claims

1. Clip filter for a hydraulic valve, having filter elements held in a support frame, wherein the support frame (41) is of ring-like form and has a clip filter lock (42), wherein, for the purpose of closing the clip filter (35), ends (43, 44) of the support frame (41) are able to be brought into engagement with one another, wherein the first end (43) has a nose-like clip element (45) and the second end (44) has a recess (46) complementary with respect to the clip element (45), wherein the recess (46) is formed such that, in the locked state, the nose-like clip element (45) is completely surrounded by it in a circumferential direction and is completely surrounded at one end and largely surrounded at the other end by it in a radial direction, wherein the nose-like clip element (45) is of wedge-shaped form with a bottom side (47) and with a top side (48) configured facing away from the bottom side (47), and the recess (46) is configured in a complementary manner, so as to have complementary surfaces, and wherein the clip element (45) and the recess (46) each have at least one surface portion (51, 52) formed so as to be orthogonal to the opening and closing direction and the clip element (45) has a bottom side formed so as to be substantially parallel to the opening and closing direction, **characterized in that**, for opening force-optimized formation of the clip filter lock (42), the recess (46) has a bulge (53) on a surface (49) opposite the bottom side (47) of the clip element (45) and the bottom side (47) of the clip element (45) has a recess (54) complementary with respect to the bulge (53), and an outer arm (60) formed on an outer side (55) of the support frame (41) is formed for the change of position in a closing process, wherein the outer arm (60) has a cross-sectional reduction (56) in the region of the recess (54).

2. Clip filter according to Claim 1, **characterized in that** the outer arm (60) has a rounding (57) on its side arranged facing away from the clip element (45).

3. Clip filter according to either of the preceding claims, **characterized in that** the filter elements are formed in a unipartite manner as a band of sheet metal having filter openings, wherein the band of sheet metal is provided so as to be injection-moulded in the support frame (41).

4. Hydraulic valve having a valve sleeve (2) and having a valve piston (3) which is axially displaceable in the valve sleeve (2) along a longitudinal axis (4) of the valve sleeve (2), having a supply port (P) for the supply of a hydraulic fluid, having at least one working port (A) and having at least one tank port (T1; T2) for the discharge of the hydraulic fluid, wherein the valve piston (3) is displaceable with the aid of an electromagnetic actuator (5) of the hydraulic valve (1), wherein the supply port (P) and/or the working port (A) are/is covered by a clip filter (35) according to one of the preceding claims.

5. Hydraulic valve according to Claim 4, **characterized in that** the hydraulic valve (1) is provided as an electrohydraulic proportional valve, in particular for a mechatronic transmission controller.

6. Hydraulic valve according to Claim 4, **characterized in that** the hydraulic valve (1) is provided as a cartridge valve for the adjustment of a camshaft adjuster.

## Revendications

1. Filtre à clip pour une vanne hydraulique comprenant des éléments de filtre reçus dans un cadre de support, le cadre de support (41) étant réalisé sous forme annulaire et présentant une fermeture de filtre à clip (42), des extrémités (43, 44) du cadre de support (41) pouvant être amenées en prise l'une avec l'autre pour fermer le filtre à clip (35), la première extrémité (43) présentant un élément de clip en forme d'ergot (45) et la deuxième extrémité (44) présentant un évidement (46) complémentaire de l'élément de clip (45), l'évidement (46) étant réalisé de manière à entourer complètement l'élément de clip en forme d'ergot (45) dans la direction périphérique dans l'état verrouillé et, dans la direction radiale, à l'entourer complètement à une extrémité et en majeure partie à l'autre extrémité, l'élément de clip en forme d'ergot (45) étant réalisé en forme de clavette avec un côté inférieur (47) et un côté supérieur (48) réalisé de manière détournée du côté inférieur (47) et l'évidement (46) étant configuré de manière complémentaire, en présentant des surfaces complémentaires, et l'élément de clip (45) ainsi que l'évidement (46) présentant chacun au moins une partie de surface (51, 52) réalisée perpendiculairement à la direction d'ouverture ou de fermeture et l'élément de clip (45) présentant un côté inférieur réalisé essentiellement parallèlement à la direction d'ouverture et de fermeture, **caractérisé en ce que** pour la réalisation optimisée en termes de force d'ouverture de la fermeture de filtre à clip (42), l'évidement (46) présente, au niveau d'une surface (49) opposée au côté inférieur (47) de l'élément de clip (45), un bourrelet (53) et le côté inférieur (47) de l'élément de clip (45) présente un évidement (54) complémentaire du bourrelet (53), et un bras extérieur (60) réalisé au niveau d'un côté extérieur (55) du cadre de support (41) étant réalisé pour modifier la position lors d'une opération de fermeture, le bras extérieur (60) présentant dans la région de l'évidement (54) une réduction de section transversale (56).

2. Filtre à clip selon la revendication 1, **caractérisé en ce que** le bras extérieur (60) présente, au niveau de son côté détourné de l'élément de clip (45), une partie arrondie (57).

3. Filtre à clip selon l'une quelconque des revendications précédentes, **caractérisé en ce que** les éléments de filtre sont réalisés d'une seule pièce sous forme de bande de tôle avec des ouvertures de filtre, la bande de tôle étant prévue sous forme moulée par injection dans le cadre de support (41).

4. Vanne hydraulique comprenant un manchon de vanne (2) et un piston de vanne (3) déplaçable axialement dans le manchon de vanne (2) le long d'un axe longitudinal (4) du manchon de vanne (2), avec un raccord d'alimentation (P) pour l'alimentation d'un fluide hydraulique, au moins un raccord de travail (A) et au moins un raccord de réservoir (T1 ; T2) pour prélever du fluide hydraulique, le piston de vanne (3) pouvant être déplacé à l'aide d'un actionneur électromagnétique (5) de la vanne hydraulique (1), le raccord d'alimentation (P) et/ou le raccord de travail (A) étant recouverts par un filtre à clip (35) selon l'une quelconque des revendications précédentes.

5. Vanne hydraulique selon la revendication 4, **caractérisée en ce que** la vanne hydraulique (1) est prévue sous forme de vanne proportionnelle électrohydraulique notamment pour une commande de transmission mécatronique.

6. Vanne hydraulique selon la revendication 4, **caractérisée en ce que** la vanne hydraulique (1) est prévue sous forme de vanne à cartouche pour le réglage d'un déphaseur d'arbre à cames.
